# FASCICULE DE BREVET EUROPEEN

(11) **EP 2 926 444 B1**
(45) Date de publication et mention de la délivrance du brevet: **02.01.2019**
(21) Numéro de dépôt: 13803187.7
(22) Date de dépôt: 26.11.2013
(51) Int. Cl.: H02M 1/36, H02M 7/217, H02M 7/219

(54) **PROCÈDE DE CONVERSION DE COURANT ALTERNATIF EN COURANT CONTINU ET DISPOSITIF ASSOCIE**
VERFAHREN ZUR WECHSELSTROM-GLEICHSTROM-WANDLUNG UND ZUGEHÖRIGE VORRICHTUNG
METHOD FOR CONVERTING ALTERNATING CURRENT TO DIRECT CURRENT AND DEVICE THEREFOR

(30) Priorité: 27.11.2012 FR 1261287
(43) Date de publication de la demande: 07.10.2015
(73) Titulaire: Safran Electrical & Power, 31702 Blagnac Cedex (FR)
(72) Inventeur: CASIMIR, Roland, F-78100 Saint-Germain-en-Laye (FR); GIORGIS, Vincent, F-94120 Saint Maur Des Fosses (FR); GIRAUD, Paul, F-77550 Moissy-Cramayel (FR)
(74) Mandataire: Brevalex
(86) Numéro de dépôt international: PCT/FR2013/052864
(87) Numéro de publication internationale: WO 2014/083276

(56) Documents cités:
- EP-A2- 2 023 476
- WO-A1-95/01670
- JP-A- 2008 061 322
- QU BO ET AL: "A study of startup inrush current of three-phase voltage source PWM rectifier with PI controller", IEEE 6TH INTERNATIONAL POWER ELECTRONICS AND MOTION CONTROL CONFERENCE, 2009 : IPEMC '09 ; WUHAN, CHINA, 17 - 20 MAY 2009, IEEE, PISCATAWAY, NJ, USA, 17 mai 2009 (2009-05-17), pages 980-983, XP031535248, ISBN: 978-1-4244-3556-2

## Description

### Domaine technique et art antérieur

L'invention concerne un procédé de conversion de courant alternatif en courant continu, plus communément appelé conversion AC/DC, et le dispositif de conversion associé.

L'invention s'applique, par exemple, à la distribution électrique pour l'alimentation de charges d'un avion. Les convertisseurs qui participent à une telle distribution électrique transforment tout d'abord un réseau alternatif en un réseau continu. Le réseau alternatif est, par exemple, un réseau de tension fourni par un générateur externe à l'avion lorsque celui-ci est au sol. A partir du réseau continu ainsi créé, d'autres convertisseurs, par exemple des onduleurs, pilotent des charges de l'avion comme, par exemple, le starter de démarrage du groupe auxiliaire de puissance situé dans le cône arrière de l'avion.

A ce jour, le mode de conversion d'énergie utilisé pour générer le réseau continu s'opère en deux étapes successives, à savoir :
- une étape de pré-charge durant laquelle un dispositif de conversion AC/DC est connecté au réseau alternatif triphasé par l'intermédiaire de résistances, et
- une étape de régulation de la tension de sortie afin d'élever celle-ci à une valeur désirée.

Les résistances de pré-charge limitent l'appel de courant qui survient sur le réseau alternatif lors de la commutation du convertisseur sur le réseau. Durant la pré-charge, il n'y a aucune régulation. Les semi-conducteurs qui font partie du convertisseur restent à l'état bloqué et le convertisseur est alors équivalent à un pont de diodes triphasé.

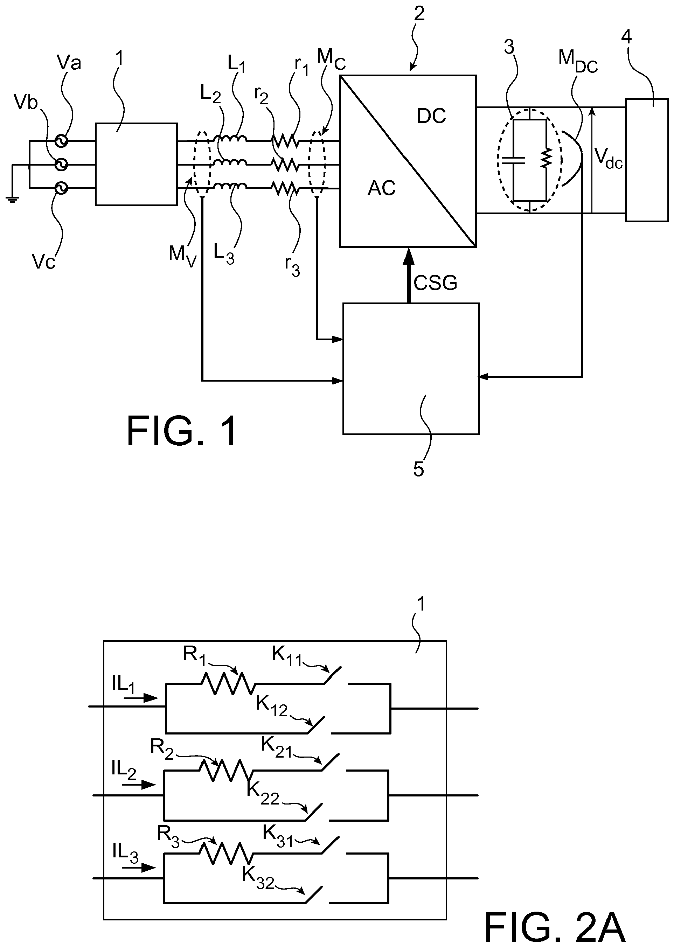

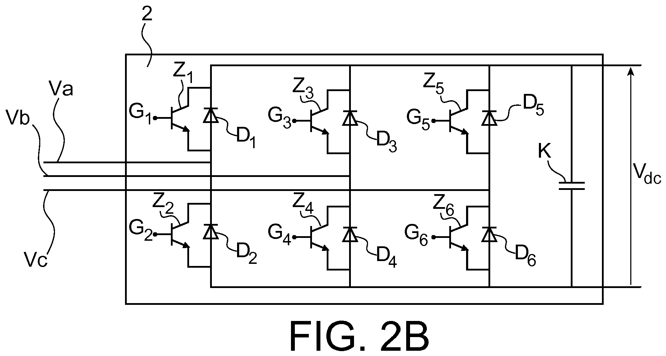

La figure 1 illustre une architecture globale de dispositif de conversion AC/DC de l'art antérieur et les figures 2A et 2B sont des vues de détail du dispositif représenté en figure 1.

L'architecture globale du dispositif de conversion AC/DC comprend un bloc 1 de résistances de pré-charge, un bloc 2 de conversion alternatif/continu, un condensateur de découplage 3, une charge 4 aux bornes de laquelle la tension continue de sortie V_{dc} est appliquée, un circuit 5 de commande, un ensemble de bobines d'auto-induction L₁, L₂, L₃ de résistances respectives r₁, r₂, r₃, un dispositif Mv de mesure des tensions alternatives d'entrée Va, Vb, Vc, un dispositif M_{C} de mesure des courants d'entrée IL₁, IL₂, IL₃ qui parcourent les bobines d'auto-induction respectives L₁, L₂, L₃ et un dispositif M_{DC} de mesure de la tension continue de sortie V_{dc}. Les mesures délivrées par les dispositifs M_{V}, M_{C} et M_{DC} sont transmises au circuit 5 de commande, lequel délivre des consignes CSG qui sont appliquées au bloc 2 de conversion alternatif/continu.

La figure 2A représente une vue de détail du bloc 1 de résistances de pré-charge. Le bloc 1 comprend trois résistances R₁, R₂, R₃ en série avec trois commutateurs respectifs K₁₁, K₂₁, K₃₁, l'ensemble constitué d'une résistance Rᵢ en série avec un commutateur Kᵢ₁ (i=1, 2, 3) étant monté en parallèle d'un commutateur Kᵢ₂.

La figure 2B représente une vue de détail du bloc 2 de conversion alternatif/continu. Le bloc 2 comprend un pont triphasé constitué de trois bras en parallèle, chaque bras étant constitué de deux interrupteurs en série, chaque interrupteur étant monté en parallèle d'une diode de roue libre. Un premier bras est formé des interrupteurs Z₁, Z₂ et des diodes D₁, D₂. Un deuxième bras est formé des interrupteurs Z₃, Z₄ et des diodes D₃, D₄. Un troisième bras est formé des interrupteurs Z₅, Z₆ et des diodes D₅, D₆. Chaque interrupteur Zⱼ est muni d'une borne de commande Gⱼ (j=1, 2, ..., 6). Chaque bras a un point milieu situé entre les deux interrupteurs en série et sur lequel est appliquée une tension alternative d'entrée différente. La tension Va est ainsi appliquée sur le point milieu des interrupteurs Z₁, Z₂, la tension Vb sur le point milieu des interrupteurs Z₃, Z₄ et la tension Vc sur le point milieu des interrupteurs Z₅, Z₆. Un condensateur K est monté entre les bornes où la tension V_{dc} de sortie est prélevée.

Lors de la phase de pré-charge, les interrupteurs Kᵢ₁ (i=1, 2, 3) sont passants et les interrupteurs Kᵢ₂ sont à l'état bloqué. Les résistances de pré-charge R₁, R₂, R₃ sont alors parcourues par les courants respectifs IL₁, IL₂, IL₃. Les résistances R₁, R₂ et R₃ permettent de limiter l'appel de courant sur le réseau alternatif lors de la commutation du bloc convertisseur alternatif/continu sur celui-ci. Durant toute l'étape de pré-charge, les interrupteurs Zⱼ sont à l'état bloqué. La tension de sortie V_{dc} s'élève jusqu'à une valeur de tension de fin de pré-charge théoriquement proportionnelle à la valeur efficace de la tension d'entrée. Lorsque la tension de sortie V_{dc} atteint sa valeur théorique, les résistances Rᵢ (i=1, 2, 3) sont court-circuitées par la fermeture des commutateurs Kᵢ₂ (état passant) et l'étape de régulation est déclenchée. En régime permanent de régulation, les interrupteurs Zⱼ sont commandés en fonction des consignes CSG pour obtenir la tension de sortie souhaitée.

Un inconvénient de ce mode de fonctionnement est l'apparition de phénomènes transitoires de type pic de courant (« inrush current » en langue anglaise) en début de régulation de la tension de sortie. Ceci a pour conséquences néfastes de stresser les composants de puissance (diminution de la fiabilité et saturation des inductances) et d'empêcher le respect des normes et des exigences à tenir concernant la qualité du réseau.

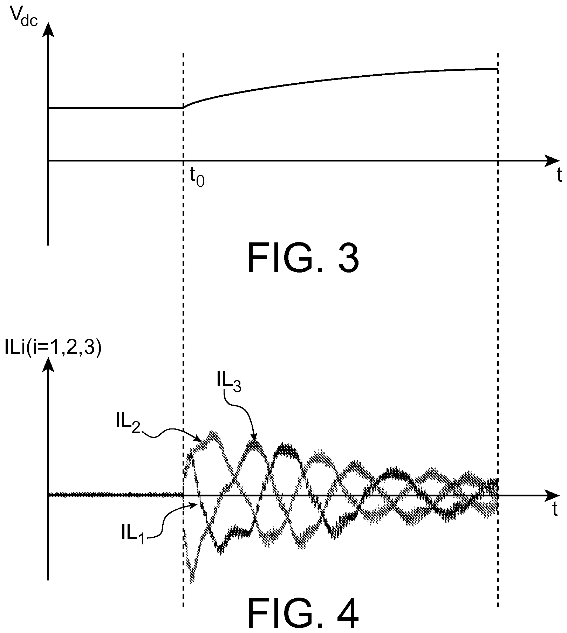

Les figures 3 et 4 illustrent l'apparition de ces phénomènes transitoires. La figure 3 représente la tension V_{dc} en sortie du convertisseur et la figure 4 représente les courants d'entrée ILᵢ (i=1, 2, 3) associés à ces phénomènes transitoires. Il apparaît sur la figure 4 que les appels de courant sur le réseau alternatif peuvent atteindre, par exemple, 170A lors de la transition entre l'étape de pré-charge et l'étape de régulation (instant tₒ sur les figures 3 et 4). Dans le cas de N convertisseurs en parallèle, le courant d'appel sur le réseau d'entrée est multiplié par N. Il s'en suit, par exemple, un courant d'appel pouvant atteindre 500A (cas de trois convertisseurs en parallèle). Ceci est un réel inconvénient.

Le procédé de l'invention ne présente pas cet inconvénient.

Le document EP-A-2 023 476 appartenant à l'état de la technique montre les caractéristiques du préambule de la revendication 1, en particulier un procédé de conversion de courant alternatif en courant continu mis en oeuvre par un dispositif de conversion qui comprend un pont triphasé apte à convertir en tension continue au moins une tension alternative d'entrée, le pont triphasé comprenant au moins un bras constitué d'un premier interrupteur et d'un deuxième interrupteur montés en série, chaque interrupteur ayant une entrée de commande apte à commander l'ouverture ou la fermeture de l'interrupteur, le procédé comprenant une étape de régulation de la tension continue, caractérisé en ce qu'il comprend une étape de transition qui précède l'étape de régulation, l'étape de transition comprenant la formation, à partir de la tension alternative d'entrée, d'un premier signal appliqué sur l'entrée de commande du premier interrupteur et d'un deuxième signal appliqué sur l'entrée de commande du deuxième interrupteur, de sorte que :
a) durant les alternances négatives de la tension alternative d'entrée, le premier signal est un signal impulsionnel dont la largeur des impulsions successives s'élargit progressivement en fonction du temps, qui ouvre et ferme le premier interrupteur, et le deuxième signal est un signal continu qui maintient le deuxième interrupteur ouvert, et
b) durant les alternances positives de la tension alternative d'entrée, le premier signal est un signal continu qui maintient ouvert le premier interrupteur et le deuxième signal est un signal impulsionnel dont la largeur des impulsions successives s'élargit progressivement en fonction du temps, qui ouvre et ferme le deuxième interrupteur.

Selon cet état de la technique, la formation du premier signal et du deuxième signal est relativement complexe.

Le procédé selon l'invention ne présente pas cet inconvénient.

Selon l'invention, la formation, à partir de la tension alternative d'entrée, dudit premier signal et dudit deuxième signal comprend :
- une génération d'impulsions successives dont la largeur s'élargit progressivement en fonction du temps,
- une formation, à partir de la tension alternative d'entrée, d'un signal logique de niveau 1 pour les alternances positives de la tension alternative d'entrée et de niveau 0 pour les alternances négatives de la tension alternative d'entrée,
- une inversion du signal logique pour former un signal logique inversé,
- une formation du deuxième signal à l'aide d'un premier circuit logique ET qui reçoit sur une première entrée lesdites impulsions et sur une deuxième entrée le signal de niveau logique, et
- une formation du premier signal à l'aide d'un deuxième circuit logique ET qui reçoit sur une première entrée lesdites impulsions et sur une deuxième entrée le signal logique inversé.

L'invention concerne également un dispositif de conversion de courant alternatif en courant continu qui comprend des moyens aptes à mettre en oeuvre le procédé de l'invention.

### Brève description des figures

D'autres caractéristiques et avantages de l'invention apparaîtront à la lecture d'un mode de réalisation préférentiel fait en référence aux figures jointes, parmi lesquelles :
- La figure 1, déjà décrite, représente une architecture globale de dispositif de conversion AC/DC ;
- Les figures 2A et 2B, déjà décrites, sont des vues de détail du dispositif représenté en figure 1 ;
- Les figures 3 et 4, déjà décrites, illustrent les phénomènes transitoires qui apparaissent dans un convertisseur alternatif/continu de l'art antérieur lors de la transition entre l'étape de pré-charge et l'étape de régulation de tension ;
- La figure 5 représente un convertisseur alternatif/continu apte à mettre en oeuvre le procédé de l'invention ;
- La figure 6 est une vue de détail du convertisseur alternatif/continu représenté en figure 5 ;
- Les figures 7a, 7b et 7c illustrent la formation de signaux de commande du dispositif de conversion AC/DC de l'invention ;
- Les figures 8a et 8b illustrent le fonctionnement de circuits du dispositif de conversion AC/DC de l'invention ;
- Les figures 9a, 9b et 9c illustrent le fonctionnement du dispositif de conversion AC/DC de l'invention sous l'effet des signaux de commande représentés aux figures 7a-7c.

### Exposé détaillé de modes de réalisation particuliers de l'invention

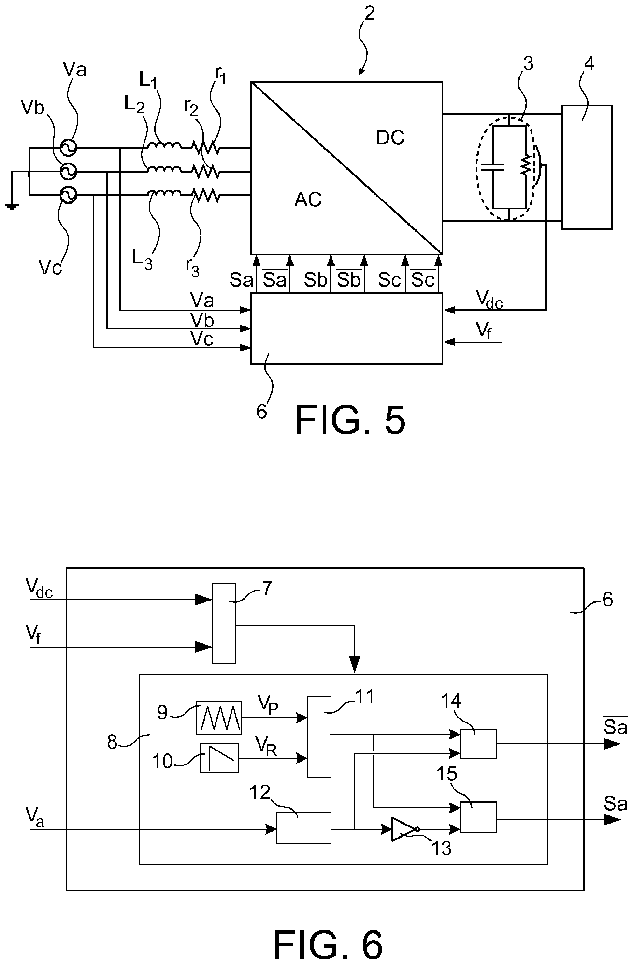

La figure 5 représente un convertisseur de courant alternatif en courant continu apte à mettre en oeuvre le procédé de conversion de l'invention.

Outre les bobines d'auto-induction L₁, L₂, L₃, de résistances respectives r₁, r₂, r₃, le bloc de conversion 2 et le condensateur 3, le convertisseur AC/DC comprend un circuit de commande 6.

Le procédé de conversion de l'invention comprend une étape de transition entre l'étape de pré-charge et l'étape de régulation. C'est le circuit de commande 6 qui permet la mise en oeuvre de l'étape de transition. Le circuit de commande 6 est activé dès lors que l'étape de pré-charge est terminée. L'étape de pré-charge se termine de façon connue en soi, par exemple par temporisation ou dès lors que la tension continue de sortie atteint une valeur de seuil prédéterminée.

Dès son activation, le circuit de commande 6 délivre des signaux de commande Sa, S̅a̅, Sb, S̅b̅, Sc, S̅c̅ qui sont appliqués, respectivement, sur les bornes G1-G6 des interrupteurs Z1-Z6. Les signaux Sa et S̅a̅ sont formés à partir de la tension d'entrée Va. De même, les signaux Sb et S̅b̅ sont formés à partir de la tension d'entrée Vb et les signaux Sc et S̅c̅ sont formés à partir de la tension d'entrée Vc. Afin de ne pas alourdir la figure 6, seule est représentée la génération des signaux Sa et S̅a̅ à partir de la tension d'entrée Va. Cependant, dans le cadre de l'invention, le bloc de commande génère également les signaux Sb, S̅b̅ et Sc, S̅c̅ selon le même principe.

La figure 6 représente le bloc de commande 6 selon le mode de réalisation préférentiel de l'invention. Le bloc 6 comprend un premier comparateur 7 et un bloc 8 de génération de signaux de commande.

Le bloc 8 de génération de signaux de commande comprend :
- un modulateur en largeur d'impulsions constitué d'un générateur 9 de signal de porteuse Vₚ, d'un générateur 10 de signal de rampe V_{R} et d'un comparateur 11,
- un circuit logique 12,
- un circuit inverseur 13, et
- deux circuits logiques ET 14 et 15.

Le circuit logique 12 reçoit sur son entrée la tension alternative Va. Le niveau logique en sortie du circuit 12 est égal à 1 quand la tension Va est positive (alternance positive) et à 0 quand la tension Va est négative (alternance négative). Ce niveau logique est appliqué sur une première entrée du circuit ET 14 et, après inversion par le circuit inverseur 13, sur une première entrée du circuit ET 15, les circuits ET 14 et 15 recevant chacun le signal que délivre le comparateur 11, lequel reçoit, sur une première entrée, le signal de porteuse Vₚ délivré par le générateur 9 et, sur une deuxième entrée, le signal de rampe V_{R} délivré par le générateur 10.

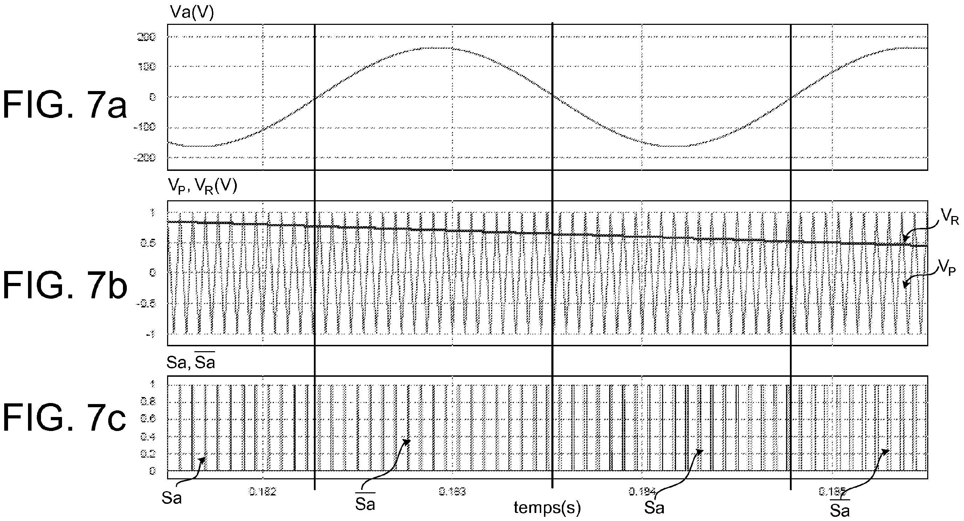

Les figures 7a-7c illustrent la formation des signaux de commande Sa, S̅a̅ qui est opérée par le bloc 8 à partir du signal d'entrée Va.

La figure 7a représente la tension alternative d'entrée Va. La figure 7b représente, dans un même repère, le signal de porteuse Vₚ et le signal de rampe V_{R}. Le signal de porteuse Vₚ est, par exemple, une tension en dent de scie qui varie entre +1 et - 1 avec une fréquence par exemple égale à 15kHz. Les niveaux symboliques +1 et -1 du signal de porteuse Vₚ peuvent correspondre, en pratique, aux niveaux de tension respectifs +5V et -5V. Le signal de rampe de tension V_{R} est un signal décroissant dont l'amplitude initiale à une valeur symbolique égale à +1. En pratique, l'amplitude initiale du signal de rampe correspond à l'amplitude maximale du signal en dent de scie, soit, par exemple, +5V. La figure 7c représente, dans un même repère, les signaux de commande Sa et S̅a̅ délivrés par le bloc 8.

Il apparaît sur la figure 7c que :
- lors des alternances positives de la tension Va, dès lors que l'amplitude du signal de porteuse dépasse la valeur de la tension de rampe, le signal S̅a̅ est formé d'une succession d'impulsions rectangulaires dont la largeur s'élargit progressivement alors que le signal Sa est à zéro, et
- lors des alternances négatives de la tension Va, dès lors que l'amplitude du signal de porteuse dépasse la valeur de la tension de rampe, le signal Sa est formé d'une succession d'impulsions rectangulaires dont la largeur s'élargit progressivement alors que le signal S̅a̅ est à zéro.

La table de vérité ci-dessous résume la logique de commande du bras qui comprend les interrupteurs Z₁, Z₂ :

| | Va>0 | Va<0 |
|---|---|---|
| Amplitude de V_{R} inférieure à l'amplitude de V_{P} | Z₁ bloqué | Z₁ passant |
| | Z₂ passant | Z₂ bloqué |
| Amplitude de V_{R} supérieure à l'amplitude de V_{P} | Z₂ bloqué | Z₁ bloqué |
| | Z₁ bloqué | Z₂ bloqué |

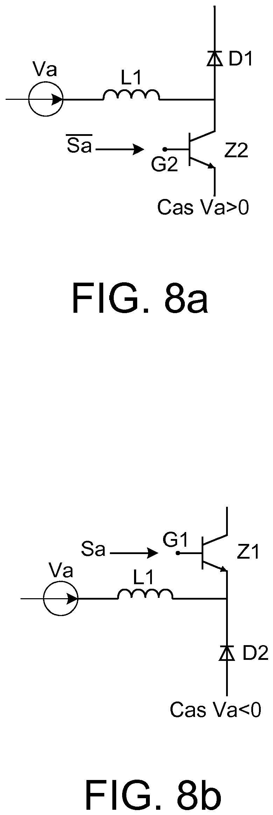

Les figures 8a et 8b illustrent la table de vérité mentionnée ci-dessus en référence au circuit.

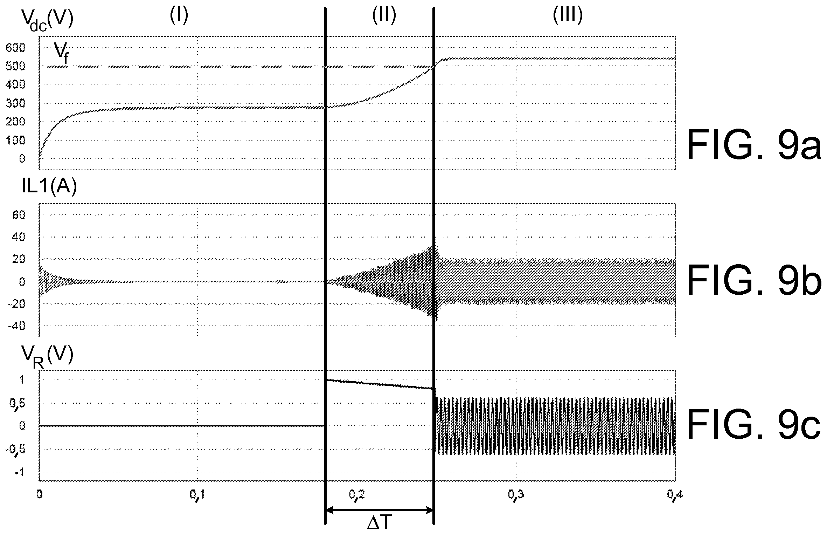

Les figures 9a-9c illustrent le fonctionnement du dispositif de conversion AC/DC de l'invention sur l'ensemble des étapes de fonctionnement, à savoir l'étape (I) de pré-charge, l'étape (II) de transition et l'étape (III) de régulation.

La figure 9a représente la tension de sortie V_{dc} du convertisseur AC/DC. La figure 9b représente le courant IL₁ qui parcourt la bobine L₁ en entrée du convertisseur et la figure 9c représente le signal de rampe V_{R}. Pour des raisons de commodité, les courants IL₂ et IL₃ qui parcourent les bobines respectives L₂ et L₃ ne sont pas représentés sur les figures 9a-9c, ces courants ayant une variation semblable à celle du courant IL₁.

Le courant d'appel IL₁ est nul au moment où le convertisseur AC/DC commute entre l'étape (I) de pré-charge et l'étape (II) de transition. Au début de l'étape de transition, la largeur des impulsions rectangulaires est faible et les courants d'appel sont en conséquence de faible amplitude. Durant la suite de l'étape de transition, la largeur des impulsions s'accroit avec le temps et les courants d'appel ont une amplitude croissante. De même, la tension V_{dc} qui est mesurée en sortie du convertisseur croît (cf. Figure 9a). Durant l'étape de transition, la tension V_{dc} mesurée en sortie du convertisseur est comparée par le comparateur 7 à une valeur de tension prédéterminée V_{f} égale, par exemple, à 90% de la tension continue de régulation souhaitée. Dès que la tension V_{dc} atteint la valeur V_{f}, le comparateur 7 délivre un signal de comparaison qui interrompt l'étape de transition et déclenche l'étape de régulation.

La durée ΔT de l'étape de transition est avantageusement ajustable. Un avantage du caractère ajustable de la durée ΔT est de pouvoir faire varier la durée du temps de montée de la tension V_{dc}. Sur les figures 9a-9c, il apparaît que cette durée est, par exemple, égale à 80ms.

De façon avantageuse, les courants d'appel ILᵢ (i=1, 2, 3) ont une amplitude qui reste faible tout au long de l'étape de transition et lors du démarrage de l'étape de régulation. A titre d'exemple non limitatif, comme cela apparaît sur la figure 9b, la valeur du courant IL₁ varie de sensiblement 0A à sensiblement 40A entre le démarrage de l'étape de transition et le démarrage de l'étape de régulation.

## Revendications

1. Procédé de conversion de courant alternatif en courant continu mis en oeuvre par un dispositif de conversion qui comprend un pont triphasé apte à convertir en tension continue (V_{dc}) au moins une tension alternative d'entrée (Va, Vb, Vc), le pont triphasé comprenant au moins un bras constitué d'un premier interrupteur (Z₁) et d'un deuxième interrupteur (Z₂) montés en série, chaque interrupteur ayant une entrée de commande apte à commander l'ouverture ou la fermeture de l'interrupteur, le procédé comprenant une étape de régulation de la tension continue, **caractérisé en ce qu'**il comprend une étape de transition qui précède l'étape de régulation, l'étape de transition comprenant la formation, à partir de la tension alternative d'entrée (Va, Vb, Vc), d'un premier signal appliqué sur l'entrée de commande du premier interrupteur et d'un deuxième signal appliqué sur l'entrée de commande du deuxième interrupteur de sorte que :
a) durant les alternances négatives de la tension alternative d'entrée, le premier signal est un signal impulsionnel dont la largeur des impulsions successives s'élargit progressivement en fonction du temps, qui ouvre et ferme le premier interrupteur (Z₁), et le deuxième signal est un signal continu qui maintient le deuxième interrupteur ouvert (Z₂), et
b) durant les alternances positives de la tension alternative d'entrée, le premier signal est un signal continu qui maintient ouvert le premier interrupteur (Z₁) et le deuxième signal est un signal impulsionnel dont la largeur des impulsions successives s'élargit progressivement en fonction du temps, qui ouvre et ferme le deuxième interrupteur (Z₂),
**caractérisé en ce que** la formation, à partir de la tension alternative d'entrée (Va, Vb, Vc), dudit premier signal et dudit deuxième signal comprend :
- une génération d'impulsions successives dont la largeur s'élargit progressivement en fonction du temps,
- une formation, à partir de la tension alternative d'entrée, d'un signal logique de niveau 1 pour les alternances positives de la tension alternative d'entrée et de niveau 0 pour les alternances négatives de la tension alternative d'entrée,
- une inversion du signal logique pour former un signal logique inversé,
- une formation du deuxième signal à l'aide d'un premier circuit logique ET (14) qui reçoit sur une première entrée lesdites impulsions et sur une deuxième entrée le signal logique, et
- une formation du premier signal à l'aide d'un deuxième circuit logique ET (15) qui reçoit sur une première entrée lesdites impulsions et sur une deuxième entrée le signal logique inversé.

2. Procédé de conversion selon la revendication 1, dans lequel l'étape de transition est interrompue et l'étape de régulation démarre dès lors que la tension continue (V_{dc}) atteint une valeur de tension prédéterminée (V_{f}).

3. Procédé de conversion selon la revendication 2, dans lequel la valeur de tension prédéterminée (V_{f}) vaut 90% d'une valeur de tension continue régulée.

4. Dispositif de conversion de courant alternatif en courant continu qui comprend un pont triphasé apte à convertir en tension continue (V_{dc}) au moins une tension alternative d'entrée (Va, Vb, Vc), le pont triphasé comprenant au moins un bras constitué d'un premier interrupteur (Z₁) et d'un deuxième interrupteur (Z₂) montés en série, chaque interrupteur ayant une entrée de commande apte à commander l'ouverture ou la fermeture de l'interrupteur, le dispositif comprenant un circuit de commande (6) qui comprend des moyens (9, 10, 11, 12, 13 ; 14, 15) aptes à délivrer, à partir de la tension alternative d'entrée (Va, Vb, Vc), un premier signal appliqué sur l'entrée de commande du premier interrupteur et un deuxième signal appliqué sur l'entrée de commande du deuxième interrupteur de sorte que :
a) durant les alternances négatives de la tension alternative d'entrée, le premier signal est un signal impulsionnel dont la largeur des impulsions successives s'élargit progressivement en fonction du temps, qui ouvre et ferme le premier interrupteur (Z₁), et le deuxième signal est un signal continu qui maintient le deuxième interrupteur ouvert (Z₂), et
b) durant les alternances positives de la tension alternative d'entrée, le premier signal est un signal continu qui maintient ouvert le premier interrupteur (Z₁) et le deuxième signal est un signal impulsionnel dont la largeur des impulsions successives s'élargit progressivement en fonction du temps, qui ouvre et ferme le deuxième interrupteur (Z₂),
**caractérisé en ce que** les moyens (9, 10, 11, 12, 13; 14, 15) aptes à délivrer, à partir de la tension alternative d'entrée, un premier signal et un deuxième signal comprennent :
- un générateur d'impulsions (9, 10, 11) ayant une sortie qui délivre des impulsions successives dont la largeur s'élargit progressivement en fonction du temps,
- un circuit logique (12) ayant une entrée et une sortie, qui reçoit sur son entrée la tension alternative d'entrée et délivre sur sa sortie un signal logique de niveau 1 pour les alternances positives de la tension alternative d'entrée et de niveau 0 pour les alternances négatives de la tension alternative d'entrée,
- un inverseur (13) qui inverse le signal logique délivré par le circuit logique (12),
- un premier circuit logique ET (14) qui reçoit sur une première entrée le signal délivré par le générateur d'impulsions (9, 10, 11) et sur une deuxième entrée le signal délivré par le circuit logique (12), la sortie du premier circuit logique ET étant reliée à l'entrée de commande du deuxième interrupteur, et
- un deuxième circuit logique ET (15) qui reçoit sur une première entrée le signal délivré par le générateur d'impulsions (9, 10, 11) et sur une deuxième entrée le signal délivré par l'inverseur (13), la sortie du deuxième circuit logique ET étant reliée à l'entrée de commande du premier interrupteur.

5. Dispositif selon la revendication 4, dans lequel le générateur d'impulsions (9, 10, 11) est un modulateur en largeur d'impulsions qui comprend un générateur de signal en dent de scie (9), un générateur de rampe (10) et un comparateur (11).

6. Dispositif selon l'une quelconque des revendications 4 à 5, dans lequel un circuit de comparaison (7) compare une mesure de la tension continue (V_{dc}) à une valeur de tension prédéterminée (V_{f}) et délivre un signal de commande qui interrompt le fonctionnement des moyens aptes à délivrer le premier et le deuxième signal (6) dès lors que la mesure de la tension continue atteint la valeur de tension prédéterminée.

## Patentansprüche

1. Verfahren zum Umwandeln von Wechselstrom in Gleichstrom, das von einer Umwandlungsvorrichtung umgesetzt wird, welche eine Dreiphasenbrücke umfasst, die in der Lage ist, mindestens eine Eingangswechselspannung (Vₐ, V_{b}, V_{c}) in Gleichspannung (V_{dc}) umzuwandeln, wobei die Dreiphasenbrücke mindestens einen Schenkel umfasst, der aus einem ersten Schalter (Z1) und aus einem zweiten Schalter (Z2) besteht, die in Reihe geschaltet sind, wobei jeder Schalter einen Steuereingang aufweist, der in der Lage ist, das Öffnen oder das Schließen des Schalters zu steuern, wobei das Verfahren einen Schritt des Regelns der Gleichspannung und einen dem Regelschritt vorausgehenden Übergangsschritt umfasst, wobei der Übergangsschritt das Bilden, ausgehend von der Eingangswechselspannung (Va, Vb, Vc), eines ersten Signals, das an den Steuereingang des ersten Schalters angelegt wird, und eines zweiten Signals, das an den Steuereingang des zweiten Schalters angelegt wird, umfasst, derart, dass:
a) während der negativen Halbschwingungen der Eingangswechselspannung das erste Signal ein Impulssignal ist, dessen Breite der aufeinanderfolgenden Impulse in Abhängigkeit von der Zeit progressiv zunimmt, welches den ersten Schalter (Z₁) öffnet und schließt, und das zweite Signal ein kontinuierliches Signal ist, das den zweiten Schalter (Z₂) offen hält, und
b) während der positiven Halbschwingungen der Eingangswechselspannung das erste Signal ein kontinuierliches Signal ist, das den ersten Schalter (Z₁) offen hält, und das zweite Signal ein Impulssignal ist, dessen Breite der aufeinanderfolgenden Impulse in Abhängigkeit von der Zeit progressiv zunimmt, welches den zweiten Schalter (Z₂) öffnet und schließt,
**dadurch gekennzeichnet, dass** das Bilden des ersten Signals und des zweiten Signals ausgehend von der Eingangswechselspannung (Va, Vb, Vc) umfasst:
- ein Erzeugen von aufeinanderfolgenden Impulsen, deren Breite in Abhängigkeit von der Zeit progressiv zunimmt
- ein Bilden, ausgehend von der Eingangswechselspannung, eines Logiksignals von Stufe 1 für die positiven Halbschwingungen der Eingangswechselspannung, und von Stufe 0 für die negativen Halbschwingungen der Eingangswechselspannung,
- ein Invertieren des Logiksignals, um ein invertiertes Logiksignal zu bilden,
- ein Bilden des ersten Signals mithilfe einer ersten logischen UND-Schaltung (14), die an einem ersten Eingang die Impulse und an einem zweiten Eingang das Logiksignal empfängt, und
- ein Bilden des zweiten Signals mithilfe einer zweiten logischen UND-Schaltung (15), die an einem ersten Eingang die Impulse und an einem zweiten Eingang das invertierte Logiksignal empfängt.

2. Umwandlungsverfahren nach Anspruch 1, wobei der Übergangsschritt unterbrochen wird und der Regelschritt startet, sobald die Gleichspannung (V_{dc}) einen vorbestimmten Spannungswert (V_{f}) erreicht.

3. Umwandlungsverfahren nach Anspruch 2, wobei der vorbestimmte Spannungswert (V_{f}) 90 % eines geregelten Gleichspannungswerts beträgt.

4. Vorrichtung zum Umwandeln von Wechselstrom in Gleichstrom, die eine Dreiphasenbrücke umfasst, welche in der Lage ist, mindestens eine Eingangswechselspannung (Va, Vb, Vc) in Gleichspannung (V_{dc}) umzuwandeln, wobei die Dreiphasenbrücke mindestens einen Schenkel umfasst, der aus einem ersten Schalter (Z₁) und aus einem zweiten Schalter (Z₂) besteht, die in Reihe geschaltet sind, wobei jeder Schalter einen Steuereingang aufweist, der in der Lage ist, das Öffnen oder das Schließen des Schalters zu steuern, wobei die Vorrichtung eine Steuerschaltung (6) umfasst, welche Mittel (9, 10, 11, 12, 13; 14, 15) umfasst, die in der Lage sind, ausgehend von der Eingangswechselspannung (Va, Vb, Vc), ein erstes Signal, das an den Steuereingang des ersten Schalters angelegt wird, und ein zweites Signal, das an den Steuereingang des zweiten Schalters angelegt wird, zu liefern, derart, dass:
a) während der negativen Halbschwingungen der Eingangswechselspannung das erste Signal ein Impulssignal ist, dessen Breite der aufeinanderfolgenden Impulse in Abhängigkeit von der Zeit progressiv zunimmt, welches den ersten Schalter (Z₁) öffnet und schließt, und das zweite Signal ein kontinuierliches Signal ist, das den zweiten Schalter (Z₂) offen hält, und
b) während der positiven Halbschwingungen der Eingangswechselspannung das erste Signal ein kontinuierliches Signal ist, das den ersten Schalter (Z₁) offen hält, und das zweite Signal ein Impulssignal ist, dessen Breite der aufeinanderfolgenden Impulse in Abhängigkeit von der Zeit progressiv zunimmt, welches den zweiten Schalter (Z₂) öffnet und schließt,
**dadurch gekennzeichnet, dass** die Mittel (9, 10, 11, 12, 13, 14, 15), die in der Lage sind, ausgehend von der Eingangswechselspannung ein erstes Signal und ein zweites Signal zu liefern, umfassen:
- einen Impulsgenerator (9, 10, 11), der einen Ausgang aufweist, welcher aufeinanderfolgende Impulse liefert, deren Breite in Abhängigkeit von der Zeit progressiv zunimmt,
- eine Logikschaltung (12), die einen Eingang und einen Ausgang aufweist, die an ihrem Eingang die Eingangswechselspannung empfängt und an ihrem Ausgang ein Logiksignal von Stufe 1 für die positiven Halbschwingungen der Eingangswechselspannung und ein Signal von Stufe 0 für die negativen Halbschwingungen der Eingangswechselspannung liefert,
- einen Inverter (13), der das von der Logikschaltung (12) gelieferte Logiksignal invertiert,
- eine erste logische UND-Schaltung (14), die an einem ersten Eingang das vom Impulsgenerator (9, 10, 11) gelieferte Signal und an einem zweiten Eingang das von der Logikschaltung (12) gelieferte Signal empfängt, wobei der Ausgang der ersten logischen UND-Schaltung mit dem Steuereingang des zweiten Schalters verbunden ist, und
- eine zweite logische UND-Schaltung (15), die an einem ersten Eingang das vom Impulsgenerator (9, 10, 11) gelieferte Signal und an einem zweiten Eingang das vom Inverter (12) gelieferte Signal empfängt, wobei der Ausgang der zweiten logischen UND-Schaltung mit dem Steuereingang des ersten Schalters verbunden ist.

5. Vorrichtung nach Anspruch 4, wobei der Impulsgenerator (9, 10, 11) ein Impulsbreitenmodulator ist, der einen Sägezahnsignalgenerator (9), einen Rampengenerator (10) und einen Komparator (11) umfasst.

6. Vorrichtung nach einem der Ansprüche 4 bis 5, wobei eine Vergleichsschaltung (7) einen Messwert der Gleichspannung (V_{dc}) mit einem vorbestimmten Spannungswert (V_{f}) vergleicht und ein Steuersignal liefert, das den Betrieb der Mittel, die in der Lage sind, das erste und das zweite Signal (6) zu liefern, unterbricht, sobald der Messwert der Gleichspannung den vorbestimmten Spannungswert erreicht.

## Claims

1. Method for converting alternating current into direct current implemented by a conversion device that comprises a three-phase bridge able to convert into direct voltage (V_{dc}) at least one alternating input voltage (Vₐ, V_{b}, V_{c}), with the three-phase bridge comprising at least one arm comprised of a first switch (Z₁) and of a second switch (Z₂) mounted in series, with each switch having a control input able to control the opening or the closing of the switch, the method comprising a step of regulating the direct voltage and a transition step which precedes the regulation step, with the transition step comprising the formation, using the alternating input voltage (Vₐ, V_{b}, V_{c}), of a first signal applied to the control input of the first switch and of a second signal applied to the control input of the second switch in such a way that:
a) during the negative alternations of the alternating input voltage, the first signal is a pulse signal of which the width of the successive pulses widens progressively as a function of time, which opens and closes the first switch (Z₁), and the second signal is a continuous signal that keeps the second switch open (Z₂), and
b) during the positive alternations of the alternating input voltage, the first signal is a continuous signal that keeps open the first switch (Z₁) and the second signal is a pulse signal of which the width of the successive pulses widens progressively as a function of time, which opens and closes the second switch (Z₂),
**characterized in that** the formation, using the alternating input voltage (Vₐ, V_{b}, V_{c}), of said first signal and of said second signal comprises:
- a generation of successive pulses of which the width widens progressively as a function of time,
- a formation, using the alternating input voltage, of a level 1 logic signal for the positive alternations of the alternating input voltage and of level 0 for the negative alternations of the alternating input voltage,
- an inversion of the logic signal in order to form an inverted logic signal,
- a formation of the second signal using a first logic AND circuit (14) which receives on a first input said pulses and on a second input the logic signal, and
- a formation of the first signal using a second logic AND circuit (15) that receives on a first input said pulses and on a second input the inverted logic signal.

2. Method for converting according to claim 1, wherein the transition step is interrupted and the regulation step starts as soon as the direct voltage (V_{dc}) reaches a predetermined voltage value (V_{f}).

3. Method for converting according to claim 2, wherein the predetermined voltage value (V_{f}) is 90% of a regulated direct voltage value.

4. Device for converting alternating current into direct current which comprises a three-phase bridge able to convert into direct voltage (V_{dc}) at least one alternating input voltage (Vₐ, V_{b}, V_{c}), with the three-phase bridge comprising at least one arm comprised of a first switch (Z₁) and a second switch (Z₂) mounted in series, with each switch having a control input able to control the opening or the closing of the switch, the device comprising a control circuit (6) which comprises means (9, 10, 11, 12, 13; 14, 15) able to output, using the alternating input voltage (Vₐ, V_{b}, V_{c}), a first signal applied to the control input of the first switch and a second signal applied to the control input of the second switch in such a way that:
a) during the negative alternations of the alternating input voltage, the first signal is a pulse signal of which the width of the successive pulses widens progressively as a function of time, which opens and closes the first switch (Z₁), and the second signal is a continuous signal that keeps the second switch open (Z₂), and
b) during the positive alternations of the alternating input voltage, the first signal is a continuous signal that keeps open the first switch (Z₁) and the second signal is a pulse signal of which the width of the successive pulses widens progressively as a function of time, which opens and closes the second switch (Z₂), **characterized in that** the means (9, 10, 11, 12, 13, 14, 15) able to output, using the alternating input voltage, a first signal and a second signal include:
- a pulse generator (9, 10, 11) having an output that outputs successive pulses of which the width widens progressively as a function of time,
- a logic circuit (12) that has an input and an output, which receives on its input the alternating input voltage and outputs on its output a level 1 logic signal for the positive alternations of the alternating input voltage and a level 0 signal for the negative alternations of the alternating input voltage,
- an inverter (13) that inverts the logic signal output by the logic circuit (12),
- a first AND logic circuit (14) that receives on a first input the signal output by the pulse generator (9, 10, 11) and on a second input the signal output by the logic circuit (12), with the output of the first logic AND circuit being connected to the control input of the second switch, and
- a second logic AND circuit (15) which receives on a first input the signal output by the pulse generator (9, 10, 11) and on a second input the signal output by the inverter (13), with the output of the second logic AND circuit being connected to the control input of the first switch.

5. Device according to claim 4, wherein the pulse generator (9, 10, 11) is a pulse width modulator that comprises a sawtooth signal generator (9), a ramp generator (10) and a comparator (11).

6. Device according to claim 4 or 5, wherein a comparison circuit (7) compares a measurement of the direct voltage (V_{dc}) to a predetermined voltage value (V_{f}) and outputs a control signal that interrupts the operation of the means able to output the first and the second signal (6) as soon as the measurement of the direct voltage reaches the predetermined voltage value.
